# EUROPEAN PATENT SPECIFICATION

(11) **EP 3 660 963 B1**
(45) Date of publication and mention of the grant of the patent: **02.12.2026**
(21) Application number: 17919284.4
(22) Date of filing: 11.10.2017
(51) Int. Cl.: C01B 32/174, H01M 4/04, H01M 4/134, H01M 4/1395, H01M 4/38, H01M 4/62, H01M 4/66, H01M 4/36, H01M 4/583, H01M 10/0525, C22C 26/00, C22C 47/08, C22C 49/04, C22C 49/14, H01G 11/26, H01G 11/36, H01G 11/50, C01B 32/00, C04B 38/00, C09C 1/48, B82Y 30/00, H01G 11/28, H01M 4/587, H01M 4/80, H01M 4/86, H01G 11/38

(54) **CARBON NANOPARTICLE-POROUS FRAMEWORK COMPOSITE MATERIAL, LITHIUM METAL COMPLEX OF CARBON NANOPARTICLE-POROUS FRAMEWORK COMPOSITE MATERIAL, PREPARATION METHODS THEREFOR, AND APPLICATIONS THEREOF**
PORÖSER KOHLENSTOFFNANOPARTIKELGERÜSTVERBUNDWERKSTOFF, LITHIUM-METALL-KOMPLEX AUS PORÖSEM KOHLENSTOFFNANOPARTIKELGERÜSTVERBUNDWERKSTOFF, HERSTELLUNGSVERFAHREN DAFÜR UND ANWENDUNGEN DAVON
MATÉRIAU COMPOSITE À STRUCTURE POREUSE À NANOPARTICULES DE CARBONE, COMPLEXE MÉTALLIQUE AU LITHIUM D'UN MATÉRIAU COMPOSITE À STRUCTURE POREUSE À NANOPARTICULES DE CARBONE, LEURS PROCÉDÉS DE PRÉPARATION ET LEURS APPLICATIONS

(30) Priority: 26.07.2017 CN 201710617358
(43) Date of publication of application: 03.06.2020
(73) Proprietor: China Energy Cas Technology Co., Ltd., Tianjin 300457 (CN)
(72) Inventor: GUO, Feng, Suzhou Jiangsu 215125 (CN); WANG, Yalong, Suzhou Jiangsu 215125 (CN); KANG, Tuo, Suzhou Jiangsu 215125 (CN); LIU, Chenghao, Suzhou Jiangsu 215125 (CN); CHEN, Peng, Suzhou Jiangsu 215125 (CN); SHEN, Yanbin, Suzhou Jiangsu 215125 (CN); LU, Wei, Suzhou Jiangsu 215125 (CN); CHEN, Liwei, Suzhou Jiangsu 215125 (CN)
(74) Representative: Ström & Gulliksson AB
(86) International application number: PCT/CN2017/105676
(87) International publication number: WO 2019/019412

(56) References cited:
- WO-A1-2017/029692
- CN-A- 101 397 652
- CN-A- 104 925 778
- CN-A- 105 374 991
- CN-A- 105 779 804
- CN-A- 106 033 815
- CN-A- 106 684 342
- CN-A- 106 711 456
- US-A1- 2013 163 146
- US-A1- 2013 183 511
- US-A1- 2017 110 719
- US-A1- 2017 187 041

## Description

### Technical Field

The present invention relates to a nano-composite material, and particularly to a carbon nanoparticle-porous skeleton composite material, its composite with lithium metal, and their preparation methods and use.

### Background

Lithium batteries have been widely used in the fields such as consumer electronics, electric vehicles, and energy storage, due to their advantages of high specific energy, long cycle life and the like. In current lithium batteries, compounds containing lithium element are used as positive electrode, and graphite is used as negative electrode. However, the graphite-based negative electrode material has a specific capacity limit of about 370 mAh/g. It is difficult to further increase the energy density of a lithium battery using such negative electrode material, and it can hardly meet the market requirement for lithium batteries with a higher energy density. Metallic lithium negative electrode has a high specific capacity (3860 mAh/g) and a low electrode potential (-3.04 V vs. standard hydrogen electrode (SHE)), and such lithium battery can therefore be widely used in the fields such as consumer electronics, electric vehicles, and energy storage due to its high specific energy, long cycle life and high voltage. Because metallic lithium negative electrode has a series of advantages of not only high specific capacity (3860 mAh/g) and low electrode potential (-3.04 V vs. SHE), but also low density (0.59 g/cm³), the lithium battery using metallic lithium as negative electrode may have a significantly improved energy density. Meanwhile, lithium ions can be provided when using metallic lithium as the negative electrode of the battery, as a result, a lithium-free material with a higher capacity, such as sulfur and air, can be used as the positive electrode.

However, in batteries with a metallic lithium negative electrode, dendrites and "dead lithium" are formed continuously during the cycle, leading to low coulombic efficiency and short cycle life. More importantly, the growth of the dendrites may puncture the separator, such that the positive electrode and the negative electrode are connected with each other and thus an internal short circuit occurs, which releases a large amount of heat, causing the battery to burn or even explode. The above problems greatly limit the use of metallic lithium negative electrode in recent decades.

CN105374991 A discloses a metallic lithium-carbon composite material and a method for its preparation, wherein a porous carbon carrier matrix consisting of spray-dried carbon nanotube microspheres with a diameter of 1 to 100 µm is mixed with metallic lithium under heating and stirring. In the method, the components are heated above the melting point of lithium and stirred uniformly for a continuous duration to allow the molten lithium to be adsorbed and distributed within the nanoscale pores and on the surface of the microspheres, achieving specific lithium mass loadings such as 35.0% or 43.0% by mass. It discloses a single-phase carbon host where the alternative carbon components are treated as mutually exclusive variants, and it utilizes a single-tier homogenization stirring process that lacks a multi-stage fluid dynamic velocity profile.

### Summary

The main object of the present invention is to provide a carbon nanoparticle-porous skeleton composite material, its composite with lithium metal, their preparation methods, an electrode and an electrochemical battery comprising the same, in order to inhibit the formation of metallic lithium dendrites, thereby improving the safety and/or cycle stability of the battery.

The object of the present invention is solved by the subject-matter of the independent claims. Preferred embodiments and further advantageous developments of the invention are defined in and are the subject-matter of the dependent claims.

The present invention has at least one of the following advantageous effects.
(1) The carbon nanoparticle-porous skeleton composite material can be mixed with molten lithium metal to form a lithium-carbon nanoparticle-porous skeleton composite material. The carbon nanoparticles present in the material can better conduct lithium ions during the battery cycle, thereby inhibiting the formation of lithium dendrites and improving the safety of the battery.
(2) The lithium-carbon nanoparticle-porous skeleton composite material can be used as negative electrode material of a battery, to improve the cycle stability of the battery.
(3) The preparation process is simple, suitable for mass production.
(4) The metallic lithium-carbon nanoparticle-porous skeleton composite material can be used in a variety of lithium batteries, and can be used in metallic lithium -oxide batteries, metallic lithium -polymer batteries, and rechargeable lithium ion batteries.

### Brief Description of Drawings

Fig. 1 shows the scanning electron microscopy (SEM) images of acetylene black-carbon nanotube microsphere composite material (a, b) and lithium-carbon composite microparticles (c, d) obtained in Example 1.
Fig. 2 is an enlarged view of the SEM image of Fig. 1b (magnification: 20000).
Fig. 3 shows the results of half-cell cycle performance tests performed on half-cells composed of the lithium-carbon composite microparticles of Example 1 and composed of a lithium sheet respectively under the conditions of a current density of 0.5 mA·cm⁻² and a capacity of 0.5 mAh·cm⁻².
Fig. 4 shows the electrode morphologies of half-cells composed of the lithium-carbon composite microparticles of Example 1 and composed of a lithium sheet respectively after 200 cycles under the conditions of a current density of 0.5 mA·cm⁻² and a capacity of 0.5 mAh·cm⁻² (a and b show the images of the lithium-carbon composite microparticles, and c and d show the images of the lithium sheet).
Fig. 5 shows the voltage-capacity curves of a half-cell of the lithium-carbon composite microparticles of Example 1/lithium at different cycles during a constant current charge-discharge test.
Fig. 6 shows the results of the capacity retention rate tests on full cells composed of the lithium-carbon composite microparticles of Example 1 and lithium iron phosphate and composed of the lithium sheet and lithium iron phosphate respectively at different cycles at 1C rate.
Fig. 7 shows a comparison view between the microsphere materials formed with the carbon nanoparticles and without the carbon nanoparticles respectively, wherein the left image is the image of the microsphere material obtained in Example 2, and the right image is the image of the microsphere material obtained in Example 1.
Fig. 8 shows the results of half-cell cycle performance tests performed on half-cells composed of the lithium-carbon composite microparticles of Example 2 and composed of a lithium sheet respectively under the conditions of a current density of 0.5 mA·cm⁻² and a capacity of 0.5 mAh·cm⁻².
Fig. 9 shows the SEM images of the lithium-carbon fiber microsphere composite material of Example 5.
Fig. 10 shows the constant current charge-discharge curve with the lithium-carbon fiber microsphere composite material of Example 5 as the negative electrode.
Fig. 11 shows the result of half-cell cycle performance test on a half-cell composed of the metallic lithium-nickel skeleton material of Example 6 under the conditions of a current density of 0.5 mA·cm⁻² and a capacity of 0.5 mAh·cm⁻².
Fig. 12 shows the results of the capacity retention rate tests on a full cell composed of the metallic lithium-nickel skeleton material of Example 6 and lithium iron phosphate at different cycles at 1C rate.

### Detailed Description

### Carbon nanoparticle-porous skeleton composite material:

One aspect of the present invention provides a carbon nanoparticle-porous skeleton composite material, comprising a porous skeleton material composed of a carbon-based porous microsphere material with a diameter of 1 to 100 µm and carbon nanoparticles distributed in the pores and on the surface of the porous skeleton material.

The carbon-based porous microsphere material comprises at least one selected from the group consisting of a carbon nanotube or carbon nanofiber microsphere material.

The carbon nanotube or carbon nanofiber microsphere material is formed by entangling and agglomerating carbon nanotubes or carbon nanofibers with each other, and has a large number of nanoscale pores in its interior and on its surface. Such microspheres have an approximately solid structure (similar to a wool ball structure). That is, the microsphere is full of carbon nanotubes or carbon nanofibers in its interior. However, there are nanoscale pores between the entangled and agglomerated carbon nanotubes or carbon nanofibers, and these pores can be used for accommodate carbon nanoparticles and metallic lithium particles.

The carbon nanotube or carbon nanofiber microsphere material is spherical or spheroidal particles. The particles have an average diameter of 1 µm to 100 µm, preferably 1 µm to 25 µm, and a specific surface area of 100 to 1500 m²/g, preferably 150 to 500 m²/g. The pores contained in the microspheres may have a pore size distribution of 1 to 200 nm, preferably 1 to 50 nm. The microspheres containing carbon nanoparticles do not vary significantly from the microspheres containing no carbon nanoparticles in the morphology and structure, only the pore volume decreases, for example, the pore volume decreases from 2.0 to 1.4 cm³·g⁻¹.

In some embodiments, the carbon nanotube or carbon nanofiber microsphere material at least has any one selected from the group consisting of a microspherical entities agglomeration structure, a spherical agglomeration structure, a spheroidal agglomeration structure, a porous spherical agglomeration structure, and a donut-shaped agglomeration structure.

In some embodiments, the carbon nanotubes comprises any one selected from the group consisting of multiple-walled carbon nanotubes, double-walled carbon nanotubes and single-walled carbon nanotubes, or a combination of two or more, and optionally the carbon nanotubes are subjected to a surface functionalization treatment. The groups modifying the surface of the carbon nanotubes can be selected from, but not limited to, -COOH, -OH, -NH₂ groups and the like.

In some embodiments, the graphite, mesocarbon microspheres and porous activated carbon are sheet-like, spherical or spheroidal particles. The particles may have an average diameter of 50 µm to 500 µm, preferably 100 µm to 200 µm, and a specific surface area of 100 to 1000 m²/g, preferably 100 to 500 m²/g. The pores contained may have a pore size distribution of 20 to 500 nm, preferably 20 to 100 nm.

The carbon nanoparticles comprises at least one selected from the group consisting of carbon black (for example, Degussa carbon black), and acetylene black

In some embodiments, the carbon nanoparticles in the carbon nanoparticle-porous skeleton composite material may have a content of 20 to 500 wt%, preferably 50 to 200 wt%, with respect to the porous skeleton.

### Method for preparing the carbon nanoparticle-porous skeleton composite material:

Another aspect of the present invention provides a method for preparing the carbon nanoparticle-porous skeleton composite material, comprising: dispersing carbon nanotubes or carbon nanofibers in a solvent together with carbon nanoparticles to form a dispersion, and then spray drying the dispersion.

According to the invention, the carbon nanoparticle-carbon nanotube or carbon nanofiber microsphere composite material are prepared by a spray drying method. For example, the preparation method may comprise the steps of:
A. dispersing carbon nanotubes/carbon nanofibers and the carbon nanoparticles in a dispersion solvent (surfactant-free) through a sonication treatment to obtain a dispersion;
B. spraying the dispersion obtained in step A out through a nozzle of a spray dryer, at a preset air inlet temperature and a preset air outlet temperature, wherein the dispersion is kept under stirring during spraying; and
C. cooling to obtain the carbon nanoparticle-carbon nanotube/carbon nanofiber microsphere composite material.

In some embodiments, a mass ratio between the carbon nanoparticles and the carbon nanotubes/carbon nanofibers in step A may be 0.5:1 to 8:1, preferably 0.5:1 to 5:1, and more preferably 0.5:1 to 2:1.

For "carbon nanoparticle" and "carbon nanotube/carbon nanofiber", reference can be made to the related description in the section of "carbon nanoparticle-porous skeleton composite material" above.

In some embodiments, a concentration of the carbon nanotubes/carbon nanofibers in the dispersion may be 10 to 50 g/L, preferably 10 to 15 g/L.

In some embodiments, as the solvent, organic and/or inorganic liquids capable of dispersing the carbon nanotubes/carbon nanofibers and the carbon nanoparticles uniformly may be used, for example, any one selected from the group consisting of water, aqueous ammonia, hydrochloric acid solution, ethanol, acetone, and isopropanol, or a combination thereof.

In some embodiments, the solvent may be a mixture of ethanol and water in a volume ratio of 1:10.

In some embodiments, the conditions for the spray drying may comprise: an air inlet temperature of 150 to 250°C, and an air outlet temperature of 75°C or more, such as 75 to 150°C, or 90°C or more. One preferred condition for the spray drying comprises: an air inlet temperature of 190 to 210°C and an air outlet temperature of 90 to 110°C.

In some embodiments, the spray speed of the spray drying may be 1 mL/min to 100 L/min. As another possibility not forming part of this invention, microscale porous graphite, mesocarbon microspheres, porous activated carbon or a porous metal material is used as the porous skeleton material, and the carbon nanoparticle-porous skeleton composite material is prepared by using an impregnation and sonication method. The impregnation and sonication method may comprise: immersing the microscale porous graphite, mesocarbon microspheres, porous activated carbon or a porous metal material in a carbon nanoparticle solution, sonicating and then drying the resultant.

In some embodiments not forming part of the present invention, the carbon nanoparticle solution comprises a solution containing carbon nanoparticles in water or an ethanol solvent or in a mixed solvent of ethanol and water.

In some embodiments not forming part of the present invention, a concentration of the carbon nanoparticles in the carbon nanoparticle solution may be 5 to 50 g/L, preferably 10 to 30 g/L.

### Metallic lithium-carbon nanoparticle-porous skeleton composite material

Another aspect of the present invention provides a metallic lithium-carbon nanoparticle-porous skeleton composite material, comprising the carbon nanoparticle-porous skeleton composite material described above, and metallic lithium distributed in the pores and on the surface of the carbon nanoparticle-porous skeleton composite material, wherein the carbon nanoparticle-porous skeleton composite material as a skeleton supports the metallic lithium, and the metallic lithium is present in the form of elementary substance in the pores or on the surface thereof (mainly in the pores, with less lithium on the surface).

The metallic lithium is 20 to 95%, preferably 20% to 70% by mass of the total mass of the composite material.

### Method for preparing the metallic lithium-carbon nanoparticle-porous skeleton composite material (not forming part of the present invention)

As another possibility not forming part of this invention provides a method for preparing the metallic lithium -carbon nanoparticle-porous skeleton composite material, comprising: mixing a molten lithium metal with the carbon nanoparticle-porous skeleton composite material described above, and then cooling the mixture.

In some embodiments not forming part of the present invention, the mixing of the molten lithium metal with the carbon nanoparticle-carbon-based porous microsphere composite material may comprise mixing the lithium metal with the carbon-based porous microsphere material under stirring and heating.

In some embodiments not forming part of the present invention, the mixing under stirring may comprise a pre-stirring step and a rapid stirring step, wherein the pre-stirring step comprises stirring a mixture of the lithium metal and the carbon nanoparticle-porous skeleton composite material at a low speed (for example, about 50 rpm to 100 rpm) at a relatively low temperature (for example, about 200°C to 230°C) for a short time period (for example, 1 to 5 minutes), and the rapid stirring step comprises stirring at a high speed (for example, about 150 rpm to 1000 rpm, preferably 200 rpm to 800 rpm) at a relatively high temperature (for example, about 230°C to 300°C).

For "carbon-based porous microsphere material", reference can be made to the related description in the section of "carbon nanoparticle-porous skeleton composite material".

In some embodiments not forming part of the present invention, the mixing of the molten lithium metal with the carbon nanoparticle-porous metal composite material may comprise immersing the carbon nanoparticle-porous metal composite material in the molten lithium metal.

In some embodiments not forming part of the present invention, the metallic lithium is 1% to 95%, preferably 10% to 70%, and more preferably 20% to 70% by mass of the total mass of the composite material.

### Use of the metallic lithium-carbon nanoparticle-porous skeleton composite material

Another aspect of the present invention provides an electrode comprising the above-described metallic lithium-carbon nanoparticle-porous skeleton composite material as an electrode material.

In some embodiments, the metallic lithium-carbon nanoparticle-porous skeleton composite material may be used as a negative electrode active material of a battery or may be directly used as an electrode (in the case of using the porous metal skeleton).

Another aspect of the present invention provides an electrochemical energy storage device comprising the above-described electrode.

In some embodiments, the electrochemical energy storage device is an electrochemical battery, and the electrode is used as the negative electrode of the battery.

In some embodiments, the electrochemical battery comprises a lithium battery, a metallic lithium-oxide battery, a metallic lithium-sulfur secondary battery, or a metallic lithium-air battery.

In some embodiments, the electrochemical energy storage device is a super-capacitor, and the electrode is used as one electrode plate of the super-capacitor.

When the lithium-carbon nanoparticle-porous skeleton composite material provided in the present invention is used in the electrochemical battery, the carbon nanoparticles present in the material can better conduct lithium ions during the battery cycle, thereby inhibiting the formation of lithium dendrites, and improving the safety of the battery, as well as being able to improve the cycle stability of the battery.

In order to make the objects, technical solutions and advantages of the present invention more clear and apparent, the present invention will be further described in detail below with reference to the drawings and examples. It should be appreciated that the particular examples described here are only intended to explain, but not to limit the present invention as defined in the attached claims.

Moreover, various product structure parameters, various reactants and process conditions used in the following examples are typical instances. However, the inventors have verified through a large number of experiments that other structure parameters, other types of reactants and other process conditions different from those listed above are also applicable, and can also achieve the technical effects as stated in the present invention.

### Example 1

2 g of multiple-walled carbon nanotubes with an outer diameter of 20 to 30 nm (CHENGDU ORGANIC CHEMICALS CO. LTD. CHINESE ACADEMY OF SCIENCES) and 2 g of acetylene black (Alfa Aesar) were added into 200 mL of deionized water, and then 20 mL of anhydrous ethanol were added. The mixture was sealed, stirred, and sonicated with a 130 W ultrasonic probe for 5 hours to disperse the sample uniformly. After that, the sample was introduced into a spray dryer. The air inlet temperature was set to 200°C, the air outlet temperature was set to 150°C, and the spray pressure was set to 40 MPa, the sample size was set to 500 mL/h. After drying, an acetylene black-carbon nanotube microsphere composite material was obtained. A nitrogen adsorption-desorption test was performed on the composite material, and the result showed that the specific surface area of the microspheres was 103 m²/g, and the average pore size was 15.2 nm.

100 mg of battery-grade metallic lithium and 100 mg of the above acetylene black-carbon nanotube microsphere composite material were weighed, placed into a heater which is inert to the metallic lithium, heated to 200°C and pre-stirred at 50 rpm for 2 minutes, then stirred at 200 rpm at 230°C for 20 minutes, and cooled to room temperature after the completion of mixing. The whole procedure was performed in a glove box under protection of argon, where the moisture content was below 10 ppm, and the oxygen content was below 10 ppm. Lithium-carbon composite microparticles were obtained. The result of a weighing test showed that the mass percentage of lithium in the lithium-carbon composite microparticles was 67.3%.

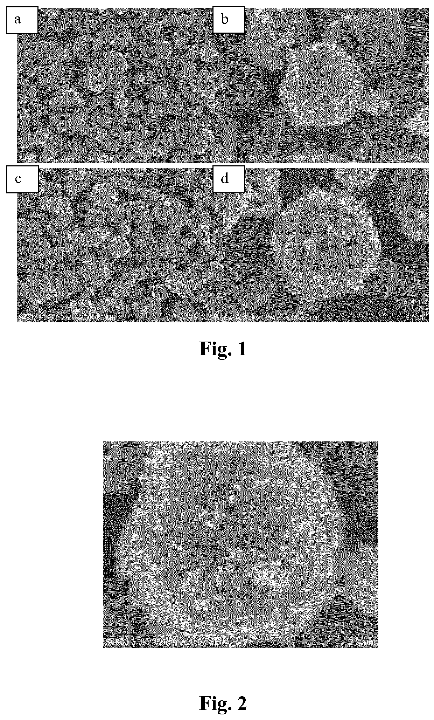

Fig. 1 shows the scanning electron microscopy (SEM) images of the acetylene black-carbon nanotube microsphere composite material (a, b) and the lithium-carbon composite microparticles (c, d) obtained in Example 1.

Fig. 2 is an enlarged view of the SEM image of Fig. 1b (magnification: 20000). The particulates in the circles are the carbon nanoparticles (i.e., the acetylene-black nanoparticles).

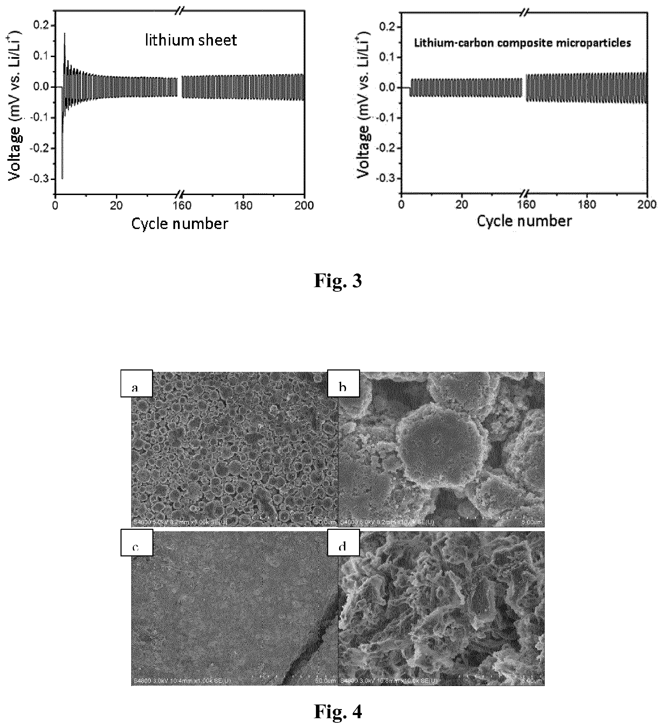

The lithium-carbon composite microparticles obtained above and a lithium sheet were respectively used to form half-cells (20 to 40 mg of the lithium-carbon composite microparticles obtained above were pressed onto a copper foam with a diameter of 1.5 cm and a thickness of 1 mm, and this material was used as the negative electrode; a lithium sheet with a thickness of 400 µm and a diameter of 1.5 cm was used as the positive electrode; and a Celgard separator (membrane) was combined with the above positive and negative electrodes to form a 2025-type coin battery), and half-cell cycle performance tests were performed under the conditions of a current density of 0.5 mA·cm⁻² and a capacity of 0.5 mAh·cm⁻². Fig. 3 shows the results of the half-cell cycle performance tests, wherein the left diagram is the cycle curve obtained using the lithium-carbon composite microparticles, and the right diagram is the cycle curve of the lithium sheet. As seen from the figure, compared to the lithium metal sheet, the lithium-carbon composite microparticles exhibited a very low polarization voltage at the beginning, indicating the large specific surface area of the material, furthermore, the polarization voltage did not significantly change at later stage of cycle, indicating that the material structure and the surface solid electrolyte interface (SEI) layer were stable.

Fig. 4 shows the electrode morphologies of half-cells composed of the lithium-carbon composite microparticles and composed of a lithium sheet respectively after 200 cycles under the conditions of a current density of 0.5 mA·cm⁻² and a capacity of 0.5 mAh·cm⁻² (a and b show the images of the lithium-carbon composite microparticles, and c and d show the images of the lithium sheet). For the lithium sheet, dendrites were distributed throughout the sample surface after the cycle, which would bring a great potential risk to the battery. In contrast, for the lithium-carbon microscale composite material, the sample remained a particulate structure after the cycle, which again proved the stability of the material structure during the cycle.

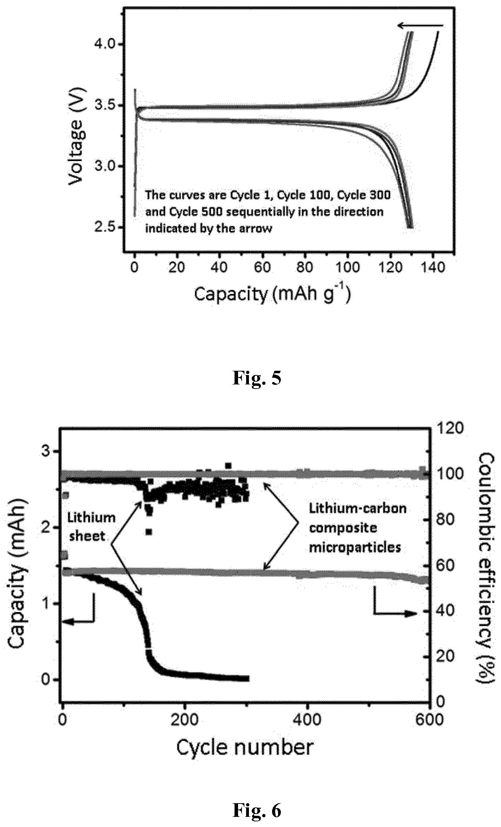

Fig. 5 shows the voltage-capacity curves of a half-cell of the lithium-carbon composite microparticles/lithium at different cycles during a constant current charge-discharge test (with a current density of 0.74 mA/cm⁻²). After 500 cycles at 1C rate, the capacity of the lithium-carbon composite microparticles did not substantially change, indicating that the surface SEI layer of the material was relatively stable during cycle, and would not consume metallic lithium continuously.

The capacity retention rates at different cycles were measured with the full cells composed of the lithium-carbon composite microparticles and lithium iron phosphate and composed of lithium sheet and lithium iron phosphate respectively (a material, which was obtained by pressing 20 to 40 mg of the lithium-carbon composite microparticles onto a copper foam with a diameter of 1.5 cm and a thickness of 1 mm, was used as the negative electrode, and a lithium iron phosphate (LFP) electrode sheet (manufactured by Sinlion Battery Tech Co., Ltd., Suzhou, with an area density of 0.7 mAh/cm²) was used as the positive electrode, to form a 2025-type coin battery) at 1C rate (the capacities of the positive electrode and the negative electrode were 1.4 mAh and 40mAh respectively). Fig. 6 shows the results of the tests. As shown in Fig. 6, after 600 cycles at 1C rate, the full cell composed of the lithium-carbon composite microparticles and lithium iron phosphate had a discharge capacity retention rate of 92.8%, while the capacity of the full cell with a lithium sheet as the negative electrode decreased continuously, and there was almost no capacity after 150 cycles.

### Example 2 (not forming part of the invention)

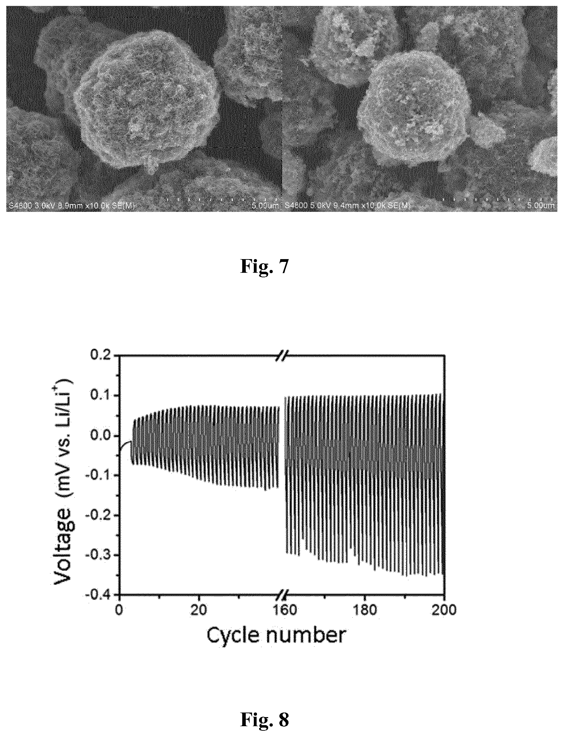

A carbon nanotube microsphere material was prepared in the same method as Example 1, except that acetylene black was not used. The specific surface area of the microsphere material was 151 m²/g, and the average pore size was 18.7 nm. Fig. 7 shows a comparison view between the microsphere materials formed without the carbon nanoparticles (left image) and with the carbon nanoparticles (right image). As seen from the figure, the morphology and structure of the microsphere material did not change significantly after the addition of the carbon nanoparticles.

The lithium-carbon composite microparticles were prepared in the same method as Example 1 by using the above carbon nanotube microsphere material, with a mass percentage of the lithium in the lithium-carbon composite microparticles of 40.4%.

Half-cell cycle performance tests were performed on half-cells composed of the lithium-carbon composite microparticles obtained above and composed of a lithium sheet respectively under the conditions of a current density of 0.5 mA·cm⁻² and a capacity of 0.5 mAh·cm⁻². Fig. 8 shows the results of the half-cell cycle performance tests. As shown in Fig. 8, for the half-cell formed with the lithium-carbon composite microparticles of Example 2, the polarization voltage of the sample increased continuously as the cycle number increased, indicating that the surface SEI layer of the sample was thicken gradually, which was resulted from the continuous reaction of the metallic lithium and the electrolyte.

### Example 3

A carbon nanoparticle-porous skeleton composite material and lithium-carbon composite microparticles were prepared in the same method as Example 1, except that Ketjen black (ECP 600JD) was used instead of acetylene black of Example 1. The mass percentage of the lithium in the lithium-carbon composite microparticles was 60.0%. The results of morphology and performance tests of the resultant material were similar to those of Example 1.

### Example 4

A carbon nanoparticle-porous skeleton composite material and lithium-carbon composite microparticles were prepared in the same method as Example 1, except that Degussa carbon black (Printex XE-2) was used instead of acetylene black of Example 1. The mass percentage of the lithium in the lithium-carbon composite microparticles was 51.8%. The results of morphology and performance tests of the resultant material were similar to those of Example 1.

### Example 5

2 g of carbon nanofibers (Alfa Aesar) and 2 g of acetylene black (Alfa Aesar) were added into 200 mL of deionized water, and then 20 mL of anhydrous ethanol were added. The mixture was sealed, stirred, and sonicated with a 130 W ultrasonic probe for 5 hours to disperse the sample uniformly. After that, the sample was introduced into a spray dryer. The air inlet temperature was set to 200°C, the air outlet temperature was set to 150°C, the spray pressure was set to 40 MPa, and the sample size was set to 500 mL/h. After drying, an acetylene black-carbon nanofiber microsphere composite material was obtained, having a similar morphology to that of the acetylene black-carbon nanotube microsphere composite material of Example 1. A nitrogen adsorption-desorption test was performed on the composite material, and the result showed that the specific surface area of the microspheres was 98 m²/g, and the average pore size was 13.1 nm.

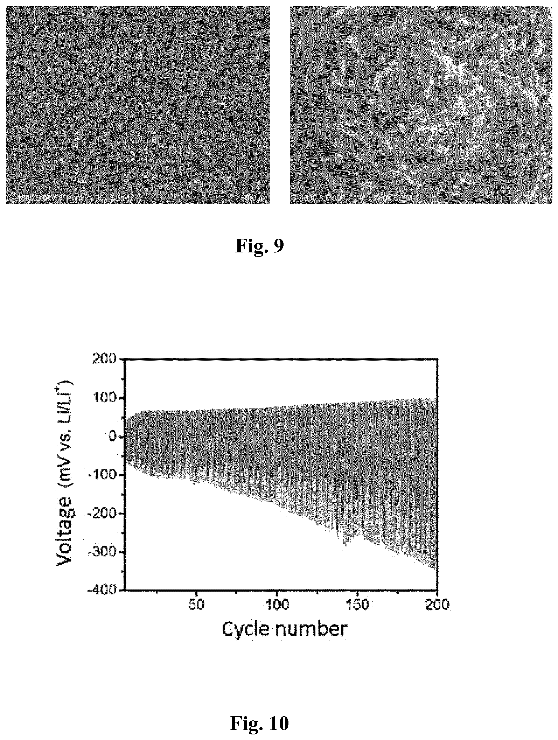

100 mg of battery-grade metallic lithium and 100 mg of the above acetylene black-carbon nanofiber microsphere composite material were weighed, placed into a heater which is inert to the metallic lithium, heated to 200°C and pre-stirred at 50 rpm for 2 minutes, then stirred at 200 rpm at 230°C for 20 minutes, and cooled to room temperature after the completion of mixing. The whole procedure was performed in a glove box under protection of argon, where the moisture content was below 10 ppm, and the oxygen content was below 10 ppm. Lithium-carbon composite microparticles were obtained. The result of a weighing test showed that the mass percentage of lithium in the lithium-carbon composite microparticles was 36.3%. Fig. 9 shows the SEM images of the lithium-carbon fiber microsphere composite material, wherein the magnification in the left image is 1000, and the magnification in the right image is 25000.

Fig. 10 shows the constant current charge-discharge curve with the lithium-carbon fiber microsphere composite material as the negative electrode. As seen from the figure, the polarization voltage of the lithium-carbon fiber microsphere composite material was very small at the beginning, indicating that the material had a large specific surface area, which could reduce the current density greatly and effectively inhibit the formation of lithium dendrites. As the potential risk of short circuit caused by dendrites could be avoid, the material was more likely to be used in practical high energy density battery system.

### Example 6 (not forming part of the invention)

2 g of porous nickel metal (with a pore size distribution within 100 to 500 µm) skeleton material with a diameter of 1.5 cm and a thickness of 500 to 1000 µm was placed in 100 mL of an aqueous solution containing acetylene black (Alfa Aesar) at a concentration of 20 g/L, and then the solution was subjected to a sonication dispersion treatment for 1 h. The resultant mixture was left standing and dried in an oven at 80°C for 24 h, to obtain a porous nickel metal skeleton material containing carbon nanoparticles. The porous nickel metal skeleton material containing carbon nanoparticles was immersed in a molten lithium metal, to obtain a metallic lithium-nickel skeleton material. The result of a weighing test showed that the mass percentage of lithium in the metallic lithium-nickel skeleton material was 50.0% [(the mass of the metallic lithium-nickel skeleton material - the mass of the nickel metal skeleton) / the mass of the metallic lithium-nickel skeleton material].

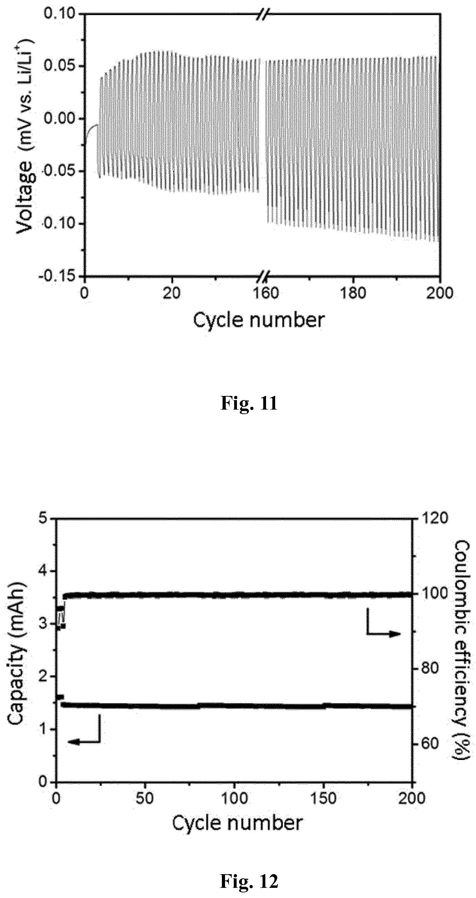

A half-cell composed of the metallic lithium-nickel skeleton carbon material was tested for the half-cell cycle performance under the conditions of a current density of 0.5 mA·cm⁻² and a capacity of 0.5 mAh·cm⁻². The result is shown in Fig. 11. As seen from Fig. 11, the polarization voltage of the sample did not substantially change after 200 cycles, and the slight increase was resulted from the gradual thickening of the surface SEI layer. In addition, the stability of the capacity and coulombic efficiency under the full cell test condition further indicated the stability of the material structure and the surface SEI layer. The full cell composed of the metallic lithium-nickel skeleton carbon material and lithium iron phosphate was tested at 1C rate for the capacity retention rate at different cycles. The results were as shown in Fig. 12.

## Claims

1. A metallic lithium-carbon nanoparticle-porous skeleton composite material, comprising a carbon nanoparticle-porous skeleton composite material, and metallic lithium,
wherein the carbon nanoparticle-porous skeleton composite material comprises:
a porous skeleton, wherein the porous skeleton is a carbon-based porous microsphere material with a diameter of 1 to 100 µm, wherein the carbon-based porous microsphere material comprises a carbon nanotube or carbon nanofiber microsphere material, wherein the carbon nanotube or carbon nanofiber microsphere material is formed by entangling and agglomerating carbon nanotubes or carbon nanofibers with each other, the microsphere formed is filled with carbon nanotubes or carbon nanofibers in its interior, but there are nanoscale pores between the entangled and agglomerated carbon nanotubes or carbon nanofibers, such that the microsphere comprises the nanoscale pores in its interior and on its surface; and wherein metallic lithium is distributed in pores of the carbon-based porous microsphere material, and wherein the metallic lithium is 20% to 95% by mass of the total mass of the metallic lithium-carbon porous skeleton composite material,
**characterized in that**
the composite material further comprises carbon nanoparticles, wherein the carbon nanoparticles are distributed in pores and on the surface of the carbon-based porous microsphere material, and wherein the carbon nanoparticles comprise at least one selected from the group consisting of carbon black, and acetylene black.

2. The metallic lithium-carbon nanoparticle-porous skeleton composite material according to claim 1, wherein the carbon nanoparticles have a content of 20 to 500 wt% with respect to the porous skeleton.

3. The metallic lithium-carbon nanoparticle-porous skeleton composite material according to any one of claims 1 to 2, wherein the carbon nanotube or carbon nanofiber microsphere material has a specific surface area of 100 to 1500 m²/g;
the carbon nanotube or carbon nanofiber microsphere material at least has any one selected from the group consisting of a microspherical entities agglomeration structure, a spherical agglomeration structure, a spheroidal agglomeration structure, a porous spherical agglomeration structure, and a donut-shaped agglomeration structure; and
the carbon nanotubes comprise any one selected from the group consisting of multiple-walled carbon nanotubes, double-walled carbon nanotubes and single-walled carbon nanotubes, or a combination of two or more, and optionally the carbon nanotubes are subjected to a surface functionalization treatment.

4. The metallic lithium-carbon nanoparticle-porous skeleton composite material according to claim 3, wherein the pores contained in the carbon nanotube or carbon nanofiber microsphere material have a pore size of 1 to 200 nm, the pore size being measured using a nitrogen adsorption-desorption test.

5. A method for preparing a metallic lithium-carbon nanoparticle-porous skeleton composite material according to any one of claims 1 to 4, comprising:
mixing molten lithium metal with the carbon nanoparticle-porous skeleton composite material and then cooling the mixture;
wherein said mixing the molten lithium metal with the carbon nanoparticle-carbon-based porous microsphere composite material comprises:
mixing the lithium metal with the carbon-based porous microsphere material under stirring and heating;
**characterized in that** the mixing under stirring comprises a pre-stirring step and a rapid stirring step, wherein the pre-stirring step comprises stirring a mixture of the lithium metal and the carbon nanoparticle-porous skeleton composite material at a speed of 50 rpm to 100 rpm at 200°C to 230°C for 1 to 5 minutes, and the rapid stirring step comprises rapidly stirring at a speed of 150 rpm to 1000 rpm at 230°C to 300°C.

6. The method according to claim 5, wherein the carbon nanoparticle-porous skeleton composite material is prepared by a process comprising:
dispersing carbon nanotubes or carbon nanofibers in a solvent together with carbon nanoparticles to form a dispersion, and then spray drying the dispersion.

7. The method according to claim 6, **characterized in that** a process of spray drying the carbon nanotubes or the carbon nanofibers together with the carbon nanoparticles comprises the steps of:
A. dispersing the carbon nanotubes/carbon nanofibers and the carbon nanoparticles in a dispersion solvent (surfactant-free) through a sonication treatment to obtain a dispersion;
B. spraying the dispersion obtained in step A out through a nozzle of a spray dryer, at a preset air inlet temperature and a preset air outlet temperature, wherein the dispersion is kept under stirring during the spraying; and
C. cooling the resultant, thereby obtaining the carbon nanoparticle-carbon nanotube/carbon nanofiber microsphere composite material.

8. The method according to claim 7, wherein
a mass ratio between the carbon nanoparticles and the carbon nanotubes/carbon nanofibers in step A is 0.5:1 to 8:1;
a concentration of the carbon nanotubes/carbon nanofibers in the dispersion is 10 to 50 g/L; and
the dispersion solvent comprises any one selected from the group consisting of water, aqueous ammonia, hydrochloric acid solution, ethanol, acetone, and isopropanol, or a combination thereof.

9. The method according to claim 7 or 8, wherein
the air inlet temperature is 190 to 210°C, and the air outlet temperature is 90 to 110°C; and
a speed of the spraying is 1 mL/min to 100 L/min.

10. An electrode comprising the lithium-carbon nanoparticle-porous skeleton composite material according to any one of claims 1 to 3.

11. An electrochemical energy storage device comprising the electrode according to claim 10, wherein the electrochemical energy storage device comprises an electrochemical battery or a super-capacitor.

12. The electrochemical energy storage device according to claim 11, wherein the electrochemical battery comprises a lithium battery, a metallic lithium-oxide battery, a metallic lithium-sulfur secondary battery, or a metallic lithium-air battery.

## Patentansprüche

1. Poröser Gerüstverbundwerkstoff aus metallischem Lithium und Kohlenstoffnanopartikeln, aufweisend einen porösen Gerüstverbundwerkstoff mit Kohlenstoffnanopartikeln und metallisches Lithium,
wobei der poröse Gerüstverbundwerkstoff mit Kohlenstoffnanopartikeln Folgendes aufweist:
ein poröses Gerüst, wobei das poröse Gerüst ein kohlenstoffbasiertes poröses Mikrokugelmaterial mit einem Durchmesser von 1 bis 100 µm ist, wobei das kohlenstoffbasierte poröse Mikrokugelmaterial ein Kohlenstoffnanoröhren- oder Kohlenstoffnanofaser-Mikrokugelmaterial aufweist, wobei das Kohlenstoffnanoröhren- oder Kohlenstoffnanofaser-Mikrokugelmaterial durch miteinander verschlungene und agglomerierte Kohlenstoffnanoröhren bzw. Kohlenstoffnanofasern gebildet ist, wobei die gebildete Mikrokugel in ihrem Inneren mit Kohlenstoffnanoröhren bzw. Kohlenstoffnanofasern gefüllt ist, jedoch zwischen den miteinander verschlungenen und agglomerierten Kohlenstoffnanoröhren bzw. Kohlenstoffnanofasern Poren im Nanometerbereich vorhanden sind, sodass die Mikrokugel in ihrem Inneren und auf ihrer Oberfläche Poren im Nanometerbereich aufweist; und
wobei metallisches Lithium in den Poren des kohlenstoffbasierten porösen Mikrokugelmaterials verteilt ist und wobei das metallische Lithium 20 bis 95 Massen-% der Gesamtmasse des porösen Gerüstverbundwerkstoffs aus metallischem Lithium und Kohlenstoff ausmacht,
**dadurch gekennzeichnet, dass** der Verbundwerkstoff
ferner Kohlenstoffnanopartikel aufweist, wobei die Kohlenstoffnanopartikel in den Poren und auf der Oberfläche des kohlenstoffbasierten porösen Mikrokugelmaterials verteilt sind und wobei die Kohlenstoffnanopartikel mindestens eines, ausgewählt aus der Gruppe bestehend aus Ruß und Acetylenruß, aufweisen.

2. Poröser Gerüstverbundwerkstoff aus metallischem Lithium und Kohlenstoffnanopartikeln nach Anspruch 1, wobei die Kohlenstoffnanopartikel einen Gehalt von 20 bis 500 Gew.-%, bezogen auf das poröse Gerüst, aufweisen.

3. Poröser Gerüstverbundwerkstoff aus metallischem Lithium und Kohlenstoffnanopartikeln nach einem der Ansprüche 1 bis 2, wobei das Kohlenstoffnanoröhren- oder Kohlenstoffnanofaser-Mikrokugelmaterial eine spezifische Oberfläche von 100 bis 1500 m²/g aufweist;
das Kohlenstoffnanoröhren- oder Kohlenstoffnanofaser-Mikrokugelmaterial mindestens eine Struktur, ausgewählt aus der Gruppe bestehend aus einer Agglomeratstruktur aus mikrokugelförmigen Einheiten, einer kugelförmigen Agglomeratstruktur, einer sphäroidischen Agglomeratstruktur, einer porösen kugelförmigen Agglomeratstruktur und einer Donut-förmigen Agglomeratstruktur, aufweist; und
die Kohlenstoffnanoröhren eine Art, ausgewählt aus der Gruppe bestehend aus mehrwandigen Kohlenstoffnanoröhren, doppelwandigen Kohlenstoffnanoröhren und einwandigen Kohlenstoffnanoröhren, oder eine Kombination aus zwei oder mehr davon aufweisen, und die Kohlenstoffnanoröhren gegebenenfalls einer Oberflächenfunktionalisierungsbehandlung unterzogen sind.

4. Poröser Gerüstverbundwerkstoff aus metallischem Lithium und Kohlenstoffnanopartikeln nach Anspruch 3, wobei die in dem Kohlenstoffnanoröhren- oder Kohlenstoffnanofaser-Mikrokugelmaterial enthaltenen Poren eine Porengröße von 1 bis 200 nm aufweisen, wobei die Porengröße mittels eines Stickstoff-Adsorptions-Desorptions-Tests gemessen ist.

5. Verfahren zur Herstellung eines porösen Gerüstverbundwerkstoffs aus metallischem Lithium und Kohlenstoffnanopartikeln nach einem der Ansprüche 1 bis 4, aufweisend:
Mischen von geschmolzenem metallischem Lithium mit dem porösen Gerüstverbundwerkstoff mit Kohlenstoffnanopartikeln und anschließendes Abkühlen der Mischung;
wobei das Mischen des geschmolzenen metallischen Lithiums mit dem Verbundwerkstoff aus Kohlenstoffnanopartikeln und kohlenstoffbasierten porösen Mikrokugeln Folgendes aufweist:
Mischen des metallischen Lithiums mit dem kohlenstoffbasierten porösen Mikrokugelmaterial unter Rühren und Erwärmen;
**dadurch gekennzeichnet, dass**
das Mischen unter Rühren einen Vorrührschritt und einen Schnellrührschritt aufweist, wobei der Vorrührschritt das Rühren einer Mischung aus dem metallischen Lithium und dem porösen Gerüstverbundwerkstoff mit Kohlenstoffnanopartikeln bei einer Drehzahl von 50 U/min bis 100 U/min und bei 200°C bis 230°C für 1 bis 5 Minuten aufweist, und der Schnellrührschritt schnelles Rühren bei einer Drehzahl von 150 U/min bis 1000 U/min und bei 230°C bis 300°C aufweist.

6. Verfahren nach Anspruch 5, wobei der poröse Gerüstverbundwerkstoff mit Kohlenstoffnanopartikeln durch ein Verfahren hergestellt wird, das Folgendes aufweist:
Dispergieren von Kohlenstoffnanoröhren oder Kohlenstoffnanofasern zusammen mit Kohlenstoffnanopartikeln in einem Lösungsmittel zur Bildung einer Dispersion, und anschließendes Sprühtrocknen der Dispersion.

7. Verfahren nach Anspruch 6, **dadurch gekennzeichnet, dass** ein Verfahren zum Sprühtrocknen der Kohlenstoffnanoröhren oder Kohlenstoffnanofasern zusammen mit den Kohlenstoffnanopartikeln die folgenden Schritte aufweist:
A. Dispergieren der Kohlenstoffnanoröhren/Kohlenstoffnanofasern und der Kohlenstoffnanopartikel in einem Dispersionslösungsmittel (tensidfrei) mittels einer Ultraschallbehandlung, um eine Dispersion zu erhalten;
B. Versprühen der in Schritt A erhaltenen Dispersion durch eine Düse eines Sprühtrockners bei einer voreingestellten Lufteinlasstemperatur und einer voreingestellten Luftauslasstemperatur, wobei die Dispersion während des Versprühens unter Rühren gehalten wird; und
C. Abkühlen des erhaltenen Produkts, wodurch der Verbundwerkstoff aus Kohlenstoffnanopartikeln und Kohlenstoffnanoröhren-/Kohlenstoffnanofaser-Mikrokugeln erhalten wird.

8. Verfahren nach Anspruch 7, wobei
das Massenverhältnis zwischen den Kohlenstoffnanopartikeln und den Kohlenstoffnanoröhren/Kohlenstoffnanofasern in Schritt A 0,5:1 bis 8:1 beträgt;
die Konzentration der Kohlenstoffnanoröhren/Kohlenstoffnanofasern in der Dispersion 10 bis 50 g/l beträgt; und
das Dispersionslösungsmittel mindestens eines, ausgewählt aus der Gruppe bestehend aus Wasser, wässriger Ammoniaklösung, Salzsäurelösung, Ethanol, Aceton und Isopropanol, oder eine Kombination davon aufweist.

9. Verfahren nach Anspruch 7 oder 8, wobei
die Lufteinlasstemperatur 190 bis 210°C und die Luftauslasstemperatur 90 bis 110°C beträgt; und
die Sprührate 1 ml/min bis 100 l/min beträgt.

10. Elektrode, aufweisend den porösen Gerüstverbundwerkstoff aus metallischem Lithium und Kohlenstoffnanopartikeln nach einem der Ansprüche 1 bis 3.

11. Elektrochemische Energiespeichervorrichtung, aufweisend die Elektrode nach Anspruch 10, wobei die elektrochemische Energiespeichervorrichtung eine elektrochemische Batterie oder einen Superkondensator aufweist.

12. Elektrochemische Energiespeichervorrichtung nach Anspruch 11, wobei die elektrochemische Batterie eine Lithiumbatterie, eine metallisches-Lithium-Oxid-Batterie, eine metallisches-Lithium-Schwefel-Sekundärbatterie oder eine metallisches-Lithium-Luft-Batterie aufweist.

## Revendications

1. Matériau composite lithium métallique - structure poreuse à nanoparticules de carbone, comprenant un matériau composite à structure porteuse à nanoparticules de carbone, et du lithium métallique,
dans lequel le matériau composite à structure poreuse à nanoparticules de carbone comprend:
une structure poreuse, dans lequel la structure poreuse est un matériau à microsphères poreuses à base de carbone d'un diamètre de 1 à 100 µm, dans lequel le matériau à microsphères poreuses à base de carbone comprend un matériau à microsphères de nanotubes de carbone ou de nanofibres de carbone, dans lequel le matériau à microsphères de nanotubes de carbone ou de nanofibres de carbone est formé par l'entrelacement et l'agglomération des nanotubes de carbone ou des nanofibres de carbone entre eux/elles, la microsphère formée étant remplie de nanotubes de carbone ou de nanofibres de carbone en son intérieur, mais présentant des pores à l'échelle nanométrique entre les nanotubes de carbone ou les nanofibres de carbone entrelacé(e)s et aggloméré(e)s, de sorte que la microsphère comprenne les pores à l'échelle nanométrique en son intérieur et sur sa surface; et dans lequel le lithium métallique est distribué dans les pores du matériau à microsphères poreuses à base de carbone, et dans lequel le lithium métallique représente de 20 % à 95 % en masse de la masse totale du matériau composite lithium métallique - structure poreuse de carbone,
**caractérisé en ce que** le matériau composite comprend en outre des nanoparticules de carbone, dans lequel les nanoparticules de carbone sont réparties dans les pores et sur la surface du matériau à microsphères poreuses à base de carbone, et dans lequel les nanoparticules de carbone comprennent au moins un élément choisi dans le groupe constitué de noir de carbone et de noir d'acétylène.

2. Matériau composite lithium métallique - structure poreuse à nanoparticules de carbone selon la revendication 1, dans lequel les nanoparticules de carbone présentent une teneur de 20 à 500 % en poids par rapport à la structure poreuse.

3. Matériau composite lithium métallique - structure poreuse à nanoparticules de carbone selon l'une quelconque des revendications 1 à 2, dans lequel le matériau à microsphères de nanotubes de carbone ou de nanofibres de carbone présente une surface spécifique de 100 à 1500 m²/g;
le matériau à microsphères de nanotubes de carbone ou de nanofibres de carbone présente au moins un quelconque élément choisi dans le groupe constitué d'une structure d'agglomération d'entités microsphériques, d'une structure d'agglomération sphérique, d'une structure d'agglomération sphéroïdale, d'une structure d'agglomération sphérique poreuse et d'une structure d'agglomération en forme de beignet; et
les nanotubes de carbone comprennent un quelconque élément choisi dans le groupe constitué de nanotubes de carbone à parois multiples, de nanotubes de carbone à double paroi et de nanotubes de carbone à paroi simple, ou d'une combinaison de deux ou plus de ces éléments, et éventuellement les nanotubes de carbone sont soumis à un traitement de fonctionnalisation de surface.

4. Matériau composite lithium métallique - structure poreuse à nanoparticules de carbone selon la revendication 3, dans lequel les pores contenus dans le matériau à microsphères de nanotubes de carbone ou de nanofibres de carbone présentent une taille de pore de 1 à 200 nm, la taille de pore étant mesurée à l'aide d'un test d'adsorption-désorption d'azote.

5. Procédé de préparation d'un matériau composite lithium métallique - structure poreuse à nanoparticules de carbone selon l'une quelconque des revendications 1 à 4, comprenant:
mélanger du lithium métallique fondu avec le matériau composite à structure poreuse à nanoparticules de carbone, et puis refroidir le mélange;
dans lequel ladite mélange du lithium métallique fondu avec le matériau composite à microsphères poreuses à base de nanoparticules de carbone comprend:
mélanger le métal lithium avec le matériau de microsphères poreuses à base de carbone sous agitation et chauffage;
**caractérisé en ce que** le mélange sous agitation comprend une étape de pré-agitation et une étape d'agitation rapide, dans lequel l'étape de pré-agitation comprenant à agiter un mélange de lithium métallique et du matériau composite à structure poreuse à nanoparticules de carbone à une vitesse de 50 tr/min à 100 tr/min à une température de 200 °C à 230 °C pendant 1 à 5 minutes, et l'étape d'agitation rapide comprenant à agiter rapidement à une vitesse de 150 tr/min à 1000 tr/min à une température de 230 °C à 300 °C.

6. Procédé selon la revendication 5, dans lequel le matériau composite à structure poreuse à nanoparticules de carbone est préparé par un processus comprenant:
disperser des nanotubes de carbone ou des nanofibres de carbone dans un solvant avec des nanoparticules de carbone pour former une dispersion, et puis sécher par pulvérisation cette dispersion.

7. Procédé selon la revendication 6, **caractérisé en ce qu'**un processus de séchage par pulvérisation des nanotubes de carbone ou des nanofibres de carbone avec les nanoparticules de carbone comprend les étapes suivantes:
A. dispersion des nanotubes de carbone/nanofibres de carbone et des nanoparticules de carbone dans un solvant de dispersion (sans tensioactif) par un traitement par sonication pour obtenir une dispersion;
B. pulvérisation de la dispersion obtenue à l'étape A à travers une buse d'un séchoir par pulvérisation, à une température d'entrée d'air prédéfinie et une température de sortie d'air prédéfinie, la dispersion étant maintenue sous agitation pendant la pulvérisation; et
C. refroidissement du résultat, obtenant ainsi le matériau composite à microsphères de nanotubes de carbone/nanofibres de carbone et nanoparticules de carbone.

8. Procédé selon la revendication 7, dans lequel
un rapport massique entre les nanoparticules de carbone et les nanotubes de carbone/nanofibres de carbone à l'étape A est de 0,5:1 à 8:1;
une concentration des nanotubes de carbone/nanofibres de carbone dans la dispersion est de 10 à 50 g/L; et
le solvant de dispersion comprend l'un quelconque choisi dans le groupe constitué d'eau, d'hydroxyde d'ammonium, de solution d'acide chlorhydrique, d'éthanol, d'acétone et d'isopropanol, ou d'une combinaison de ceux-ci.

9. Procédé selon la revendication 7 ou 8, dans lequel
la température d'entrée d'air est de 190 à 210 °C, et la température de sortie d'air est de 90 à 110 °C; et
une vitesse de pulvérisation est de 1 mL/min à 100 L/min.

10. Électrode comprenant le matériau composite lithium - structure poreuse à nanoparticules de carbone selon l'une quelconque des revendications 1 à 3.

11. Dispositif de stockage d'énergie électrochimique comprenant l'électrode selon la revendication 10,
dans lequel le dispositif de stockage d'énergie électrochimique comprend une batterie électrochimique ou un supercondensateur.

12. Dispositif de stockage d'énergie électrochimique selon la revendication 11, dans lequel la batterie électrochimique comprend une batterie au lithium, une batterie à oxyde de lithium métallique, une batterie secondaire lithium-soufre métallique ou une batterie lithium-air métallique.
